# EUROPEAN PATENT APPLICATION

(11) **EP 4 831 828 A1**
(43) Date of publication of application: **28.10.2026**
(21) Application number: 25894207.7
(22) Date of filing: 13.11.2025
(51) Int. Cl.: G06F 16/2455

(54) **METHOD FOR TRIGGERING ASSOCIATIVE SEARCH**

(30) Priority: 21.11.2024 CN 202411676822
(71) Applicant: Huawei Technologies Co., Ltd., Shenzhen, Guangdong 518129 (CN)
(72) Inventor: LI, Dongliang, Shenzhen, Guangdong 518129 (CN); TIAN, Long, Shenzhen, Guangdong 518129 (CN); LIANG, Haowei, Shenzhen, Guangdong 518129 (CN); HE, Liping, Shenzhen, Guangdong 518129 (CN); JI, Wei, Shenzhen, Guangdong 518129 (CN)
(74) Representative: Epping - Hermann - Fischer
(86) International application number: PCT/CN2025/134613
(87) International publication number: WO 2026/108701

(57) **Abstract**

Embodiments of this application disclose a method for triggering associative search. **In** the triggering method, an electronic device can start the foregoing associative search function by using diversified methods based on a specific scenario of a user, to provide the user with more intuitive prompts in the specific scenario, so that the associative search function is used more conveniently and efficiently. The foregoing scenario includes but is not limited to the following scenarios: a global search scenario, a single-application search scenario, a multi-application search scenario, an associative search scenario, and a multi-modal input scenario.

## Description

This application claims priority to Chinese Patent Application No. 202411676822.1, filed with the China National Intellectual Property Administration on November 21, 2024, and entitled "METHOD FOR TRIGGERING ASSOCIATIVE SEARCH", which is incorporated herein by reference in its entirety.

### TECHNICAL FIELD

This application relates to the field of terminal technologies, and in particular, to a method for triggering associative search.

### BACKGROUND

In a multi-task processing scenario, a user needs to frequently switch between different tasks to improve work efficiency and cope with diversified application scenarios. For a device having a large screen, associated operations may be performed on an electronic device by making full use of space of the screen, that is, linkage control can be performed on a plurality of applications through a single user operation, to improve work efficiency of the user and better satisfy a complex usage requirement of the user. As an important part of interaction between the user and the device, a search function plays a vital role in the associated operations on the plurality of applications. The search function in the associated operations is also referred to as an associative search function.

For example, the user may select a plurality of applications on a desktop interface to simultaneously start the applications to start the foregoing associative search function. However, even if an operating system has already integrated the foregoing associative search function, in some scenarios, the foregoing method for triggering associative search is still not convenient enough to satisfy a requirement of the user. As a result, usage of the function is not ideal.

### SUMMARY

This application provides a method for triggering associative search. In the triggering method, an electronic device can start the foregoing associative search function by using diversified methods based on a specific scenario of a user, to provide the user with more intuitive prompts in the specific scenario, so that the associative search function is used more conveniently and efficiently. The foregoing scenario includes but is not limited to the following scenarios: a global search scenario, a single-application search scenario, a multi-application search scenario, an associative search scenario, and a multi-modal input scenario.

According to a first aspect, this application provides a method for triggering associative search, which is applied to an electronic device. The method includes: displaying a global search interface, where the global search interface includes a global search input box; detecting that a user enters a first search word in the global search input box; displaying a global search result interface in response to detecting that the user enters the first search word in the global search input box, where the global search result interface includes search result indication information of m applications, and m is a positive integer greater than or equal to 2; and displaying a composite interface of n applications in response to detecting a first operation, where the composite interface includes application interfaces of at least two applications, the interfaces of the at least two applications respectively include a search result related to the first search word, and n is less than or equal to m.

According to the method provided in the first aspect, after detecting that the user enters the search word in the global search input box, the electronic device may present the search result indication information of the m applications to the user on the global search result interface; and when the first operation such as a selection operation of the user is detected, trigger associative search and display the composite interface of the n applications. The composite interface includes search result interfaces of the at least two applications.

Compared with a manner of touching and holding and selecting a plurality of applications to start associative search, triggering associative search by performing the first operation on the global search interface better conforms to a routine usage habit of the user, so that an intuitive and efficient associative search function is provided for the user in a global search scenario.

With reference to the first aspect, in some embodiments, that the global search result interface includes the search result indication information of the m applications includes: displaying icons of the m applications on the global search result interface.

With reference to the first aspect, in some embodiments, after detecting the first operation and before displaying the composite interface of the n applications, the method further includes: further displaying thumbnails of search results of the n applications below the search result indication information of the m applications on the global search result interface, where in the n thumbnails, the first search word is filled in search boxes of all the n applications, and respective search results of the n applications are further displayed in the n thumbnails.

According to the method provided in the foregoing embodiments, the electronic device may display, on the global search result interface, the thumbnails of the search results that are of the n applications selected by the user and that are based on the first search word, to help the user quickly determine whether to choose to start the applications, thereby improving experience in using the foregoing associative search.

With reference to the first aspect, in some embodiments, an arrangement order of the icons of the m applications or the n thumbnails on the global search result interface is determined based on one or more of the following: a frequency at which the user uses the application, and a degree of association between a respective search result of the application and the first search word.

According to the method provided in the foregoing embodiments, the electronic device may sort the thumbnails or the icons of the applications in the global search results based on a specific rule, to help the user quickly select applications for associative search, thereby improving experience in using the foregoing associative search function.

With reference to the first aspect, in some embodiments, the m applications are displayed in a classified manner on the global search result interface based on types of the applications.

According to the method provided in the foregoing embodiments, the electronic device may obtain a plurality of applications in global search based on a same search word, and display the plurality of applications in the classified manner, so that the user can quickly find a required application and subsequently perform the associative search function, thereby improving user experience in using the foregoing associative search function.

With reference to the first aspect, in some embodiments, the n applications are set by default as top n applications in the m applications in terms of the frequency of use by the user.

According to the method provided in the foregoing embodiments, the electronic device may perform default setting on the n applications for associative search, so that when the default setting is consistent with the user selection, the user can quickly start the foregoing associative search function. Default applications for associative search are selected from the global search results based on the frequency of use by the user, so that a usage habit of the user can be fully considered, thereby bringing better user experience.

With reference to the first aspect, in some embodiments, the n applications are set by default as top n applications in the m applications in terms of the degree of association between the respective search result and the first search word.

According to the method provided in the foregoing embodiments, the default applications for associative search are selected based on the degree of association between the search result and the search word, and most associated applications may be recommended to the user for associative search, to help the user obtain a better search result with a higher degree of association in the associative search, thereby bringing better user experience. Optionally, the degree of association between the search word and the search result may be measured by using an indicator such as a recall rate.

With reference to the first aspect, in some embodiments, the first operation includes selecting, by the user, the n applications from the m applications.

With reference to the first aspect, in some embodiments, at least two complete application interfaces and at least one incomplete application interface are displayed on the composite interface of the n applications.

According to the method provided in the foregoing embodiments, due to a limitation in a size of a screen of the electronic device, when displaying the composite interface of a plurality of applications in associative search, the electronic device may display at least two complete application interfaces in a tiled manner, and may further display at least one incomplete application interface on a side of the screen. Therefore, the electronic device can break through the limitation in the size of the screen of the electronic device, and simultaneously display search result interfaces of the plurality of applications based on the first search word. A portion beyond tiled display of the screen may be displayed on a side in a form of an incomplete application interface, so that the interface can be quickly opened when the interface needs to be viewed, thereby helping improve user experience.

With reference to the first aspect, in some embodiments, whether application interfaces of the n applications displayed on the composite interface are complete is determined based on one or more of the following: the frequency at which the user uses the application, and the degree of association between the respective search result of the application and the first search word.

According to the method provided in the foregoing embodiments, the electronic device may also determine, based on a rule such as the frequency of use and/or the degree of association between the search result and the search word, applications that need to be displayed in a tiled manner and applications that may be displayed on a side in an incomplete form on the composite interface, so that a usage habit of the user and a search effect are fully considered, thereby helping improve user experience in associative search.

According to a second aspect, this application provides a method for triggering associative search, which is applied to an electronic device. The method includes: displaying a first search interface, where the first search interface is a search interface of a first application, and the first search interface includes an input box; detecting that a user enters a first search word; displaying an identifier of a second application in a floating manner; and displaying a composite interface of a plurality of applications in response to a selection operation performed on the identifier of the second application, where the composite interface includes a first search result interface and a second search result interface, the first search result interface displays a search result that is based on the first search word and provided by the first application, and the second search result interface displays a search result that is based on the first search word and that is of the second application.

According to the method provided in the second aspect, the electronic device may trigger the foregoing associative search function when detecting the user operation of selecting the identifier of the second application displayed in the floating manner on the interface of the first application. The identifier of the second application is displayed in the floating manner only when the user enters a search word on the search interface of the first application. Therefore, in a scenario of search in a single application, the electronic device can actively prompt the user for triggering associative search with a same search word in a plurality of applications, so that the user can obtain more search results by performing fewer user operations, thereby improving user experience in associative search and resolving a practical requirement of the user.

With reference to the second aspect, in some embodiments, after detecting that the user enters the first search word, the method further includes: displaying the search result that is based on the first search word and provided by the first application, and displaying a DOCK bar on a side of a screen; and displaying the identifier of the second application in the floating manner specifically includes: adding the identifier of the second application to and displaying the identifier of the second application on the DOCK bar based on the first search word.

According to the method provided in the foregoing embodiments, the electronic device may display the DOCK bar in the floating manner on the search result interface of the first application, and add, based on the first search word, an identifier of an application (namely, the second application) on which associative search can be performed to the DOCK bar, so that the user can be effectively guided to use the foregoing associative search function.

With reference to the second aspect, in some embodiments, before detecting that the user enters the first search word, the method further includes: displaying a soft keyboard, where the first search word is entered by using the soft keyboard; and displaying the identifier of the second application in the floating manner specifically includes: displaying, based on the first search word, the identifier of the second application in the floating manner above an associative word provided by the soft keyboard.

According to the method provided in the foregoing embodiments, the electronic device may display, in the floating manner above the associative word provided by the soft keyboard on the search interface of the first application, an identifier of an application (namely, the second application) on which associative search can be performed, so that the user can be effectively guided to use the foregoing associative search function.

With reference to the second aspect, in some embodiments, the composite interface includes at least two complete application interfaces and at least one incomplete application interface, and the application interfaces separately display content and/or services that are related to the first search word and respectively provided.

By implementing the method provided in the foregoing embodiments, the electronic device can break through a limitation in a size of the screen of the electronic device, and simultaneously display search result interfaces of the plurality of applications based on the first search word. A portion beyond tiled display of the screen may be displayed on a side in a form of an incomplete application interface, so that the interface can be quickly opened when the interface needs to be viewed, thereby helping improve user experience.

According to a third aspect, this application provides a method for triggering associative search. The method includes: displaying a first search interface and a second user interface, where the first search interface is a search interface of a first application, and the second user interface is a non-search interface of a second application; displaying a soft keyboard before it is detected on the first search interface that a user enters a first search word, where the soft keyboard includes a search word synchronization control after it is detected on the first search interface that the user enters the first search word; and in response to a user operation performed on the search word synchronization control, triggering the second application to jump from the second user interface to a second search interface or a second search result interface, where the second search interface is a search interface of the second application, the second search result interface is a search result interface of the second application, and a search result on the second search result interface is content and/or a service that are/is related to the first search word and provided by the second application.

According to the method provided in the third aspect, the electronic device may provide the search word synchronization control on the soft keyboard, so that when the control is triggered, the electronic device may synchronize a search word for one application in a plurality of started applications to the plurality of started applications, thereby implementing the foregoing associative search function.

With reference to the third aspect, in some embodiments, the method further includes: displaying the first search interface and a fourth user interface, where the fourth user interface is a non-search interface of a third application, and the third application does not provide search content and/or a service related to the first search word; and displaying the soft keyboard before it is detected on the first search interface that the user enters the first search word, where the soft keyboard does not include the search word synchronization control after it is detected on the first search interface that the user enters the first search word.

According to the method provided in the foregoing embodiments, if a started application is unable to provide a service and/or content related to a search word, to guide the user clearly, the electronic device may not display the search word synchronization control on the soft keyboard. Presence of the search word synchronization control on the soft keyboard indicates that a plurality of currently started applications support associative search.

With reference to the third aspect, in some embodiments, the first application and the second application are applications of a same type.

According to the method provided in the foregoing embodiments, the plurality of started applications are applications of the same type to ensure to the maximum extent that the second application is able to provide a service and/or content related to a search word, so that the user can perform an operation such as price comparison by using the associative search function, thereby improving user experience.

According to a fourth aspect, this application provides a method for triggering associative search, which is applied to an electronic device. The method includes: displaying a soft keyboard; detecting that a user performs user input by using the soft keyboard; displaying a recommended associative word and identifiers of a plurality of applications in a candidate-word window of the soft keyboard, where the plurality of applications are determined based on the recommended associative word; and displaying a composite interface of the plurality of applications in response to a user operation performed on the identifiers of the plurality of applications, where the composite interface separately displays content and/or services that are related to the recommended associative word and respectively provided by the plurality of applications.

According to the method provided in the fourth aspect, the electronic device can obtain the recommended associative word through inputs of the soft keyboard, and display the identifiers of the plurality of applications on the soft keyboard based on the recommended associative word. After the identifiers of the plurality of applications are tapped, the electronic device may display the composite interface of the plurality of applications, and trigger an associative search function in the plurality of applications. It may be understood that the foregoing solution is equivalent to providing a control (for example, a capsule control) on the soft keyboard provided by a system. The control may be understood as a shortcut key of the associative search function in the plurality of applications. An operation on the control can quickly trigger associative search among the plurality of applications that are able to provide corresponding content and/or services, thereby greatly improving interaction efficiency and convenience.

With reference to the fourth aspect, in some embodiments, before displaying the soft keyboard, the method further includes: displaying a chat interface; and detecting an operation of tapping an input box by the user on the chat interface.

According to the method provided in the foregoing embodiments, the electronic device may start the soft keyboard on the chat interface, so that the associative search function in the plurality of applications may be quickly started by using the soft keyboard in a chat process.

With reference to the fourth aspect, in some embodiments, the composite interface includes at least two complete application interfaces and at least one incomplete application interface, and the application interfaces separately display content and/or services that are related to the recommended associative word and respectively provided.

By implementing the method provided in the foregoing embodiments, the electronic device can break through a limitation in a size of a screen of the electronic device, and simultaneously display search result interfaces of the plurality of applications based on a first search word. A portion beyond tiled display of the screen may be displayed on a side in a form of an incomplete application interface, so that the interface can be quickly opened when the interface needs to be viewed, thereby helping improve user experience.

According to a fifth aspect, this application provides a method for triggering associative search, which is applied to an electronic device. The method includes: displaying a first search interface and a second user interface, where the first search interface is a search interface of a first application, and the second user interface is a user interface of a second application; and displaying a first search result interface and a third user interface after detecting on the first search interface that a user enters a first search word, where the first search result interface displays a search result that is based on the first search word and provided by the first application, and the third user interface displays content and/or a service that are/is related to the first search word and provided by the second application.

According to the method provided in the fifth aspect, the electronic device may simultaneously open interfaces of a plurality of applications, for example, display the first search interface and the second user interface. Then the electronic device may automatically trigger an associative search operation in another application (namely, the second application) based on a search word entered in the first application.

With reference to the fifth aspect, in some embodiments, after detecting on the first search interface that the user enters the first search word, the method further includes: determining that the second application is able to provide content and/or a service related to the first search word.

According to the method provided in the foregoing embodiments, performing the foregoing determining step can effectively ensure that the second application is able to perform interface jumping correctly, thereby providing an associative search result that satisfies the user expectation.

With reference to the fifth aspect, in some embodiments, the method further includes: displaying the first search interface and a fifth user interface on a screen, where the fifth user interface is a user interface of a third application; and detecting that the user enters the first search word on the first search interface, and displaying the first search result interface and the fifth user interface, where the first search result interface displays a search result that is based on the first search word and provided by the first application, and the third application is unable to provide content and/or a service related to the first search word.

According to the method provided in the foregoing embodiments, if a started application (for example, the third application) is unable to provide a service and/or content related to the first search word, the electronic device may keep a user interface of the third application unchanged after the search word is entered.

With reference to the fifth aspect, in some embodiments, the method further includes: displaying the first search interface and a fifth user interface, where the fifth user interface is a user interface of a third application; and detecting that the user enters the first search word on the first search interface, and displaying the first search result interface and the third user interface, where the first search result interface displays a search result that is based on the first search word and provided by the first application, the third user interface is a user interface of the second application, the third user interface displays content and/or a service that are/is related to the first search word and provided by the second application, and the third application is unable to provide content and/or a service related to the first search word.

According to the method provided in the foregoing embodiments, if a started application (for example, the third application) is unable to provide a service and/or content related to the first search word, after the search word is entered, the electronic device may allow the second application to provide a user interface (for example, the third user interface) having a service and/or content related to the first search word, to replace a current user interface (namely, the fifth user interface) of the third application.

With reference to the fifth aspect, in some embodiments, the second application used to replace the third application is determined by the electronic device based on one or more of the following from an application that is able to provide content and/or a service related to the first search word: a frequency at which the user uses the application, and a degree of association between the content and/or the service that are/is in the application and related to the first search word and the first search word.

With reference to the fifth aspect, in some embodiments, the first application is a map application, the first search word is a place A, the second user interface is a homepage of a travel application, the second application is the travel application, the first search result interface displays a search result about the place A in the map application, the third user interface is a ticket buying interface in the travel application, the third user interface displays ticket buying information of a current day for going from a place B to the place A, the place B is a location of the user, and the place B and a current date are read by the electronic device by using an operating system.

With reference to the fifth aspect, in some embodiments, the first application is the same as the second application, and the first search result interface and the third user interface display different content and/or different services that are in the first application and related to the first search word.

According to the method provided in the foregoing embodiments, the electronic device may open a plurality of interfaces of an application instead of the application. The plurality of interfaces can provide different services and/or content related to the first search word. Therefore, when opening a plurality of windows of an application, the user may also perform the foregoing associative search operation on different content and/or services in the application based on a same search word, thereby helping improve efficiency of the user during research and improve user experience.

According to a sixth aspect, this application provides an electronic device, including a memory, a processor, and a computer program stored in the memory. The processor executes the computer program to implement the method described in any one of the first aspect and the possible implementations of the first aspect, or any one of the second aspect and the possible implementations of the second aspect, or any one of the third aspect and the possible implementations of the third aspect, or any one of the fourth aspect and the possible implementations of the fourth aspect, or any one of the fifth aspect and the possible implementations of the fifth aspect.

According to a seventh aspect, this application provides a computer-readable storage medium. The computer-readable storage medium stores a computer program. When the computer program is executed by a processor, the method described in any one of the first aspect and the possible implementations of the first aspect, or any one of the second aspect and the possible implementations of the second aspect, or any one of the third aspect and the possible implementations of the third aspect, or any one of the fourth aspect and the possible implementations of the fourth aspect, or any one of the fifth aspect and the possible implementations of the fifth aspect is implemented.

According to an eighth aspect, this application provides a computer program product, including a computer program. When the computer program is executed by a processor, the method described in any one of the first aspect and the possible implementations of the first aspect, or any one of the second aspect and the possible implementations of the second aspect, or any one of the third aspect and the possible implementations of the third aspect, or any one of the fourth aspect and the possible implementations of the fourth aspect, or any one of the fifth aspect and the possible implementations of the fifth aspect is implemented.

It may be understood that the electronic device provided in the sixth aspect, the computer storage medium provided in the seventh aspect, and the computer program product provided in the eighth aspect are all configured to perform the method provided in this application. Therefore, for beneficial effects that can be achieved thereof, refer to beneficial effects in the corresponding method. Details are not described herein.

### BRIEF DESCRIPTION OF DRAWINGS

FIG. 1 is a diagram of a result of a kind of existing global search according to an embodiment of this application;
FIG. 2 is a schematic flowchart of a method for triggering associative search in a global search scenario according to an embodiment of this application;
FIG. 3 is a diagram of an interface for performing associative search in a plurality of applications according to an embodiment of this application;
FIG. 4 is a diagram of an example of an interface in a specific implementation in a global search scenario;
FIG. 5 is a diagram of another interface for performing associative search in a plurality of applications according to an embodiment of this application;
FIG. 6 is a schematic flowchart of a method for triggering associative search in a single-application search scenario according to an embodiment of this application;
FIG. 7 is a diagram of an example of an interface for triggering associative search in a plurality of applications in a single-application search scenario;
FIG. 8 is a diagram of an interface that is used for performing associative search in a plurality of applications and that is obtained based on the method shown in FIG. 6 according to an embodiment of this application;
FIG. 9 is a diagram of another interface for triggering associative search in a plurality of applications in a single-application search scenario according to an embodiment of this application;
FIG. 10 is a schematic flowchart of a method for triggering associative search in a multi-application search scenario according to an embodiment of this application;
FIG. 11 is a diagram of an interface for triggering associative search in a plurality of applications in a multi-application search scenario according to an embodiment of this application;
FIG. 12 is a diagram of an interface that is used for performing associative search in a plurality of applications and that is obtained based on the method shown in FIG. 10 according to an embodiment of this application;
FIG. 13 is a schematic flowchart of a method for triggering associative search in an associative search scenario according to an embodiment of this application;
FIG. 14 is a diagram of an interface for triggering associative search in a plurality of applications in an associative search scenario according to an embodiment of this application;
FIG. 15 is a diagram of an interface that is used for performing associative search in a plurality of applications and that is obtained based on the method shown in FIG. 13 according to an embodiment of this application;
FIG. 16 is a schematic flowchart of a method for triggering associative search in a multi-modal input scenario according to an embodiment of this application;
FIG. 17 is a diagram of an example of an interface for triggering associative search in a plurality of applications in a multi-modal input scenario;
FIG. 18 is a diagram of an interface that is used for performing associative search in a plurality of applications and that is obtained based on the method shown in FIG. 16 according to an embodiment of this application; and
FIG. 19 is a diagram of a hardware structure of an electronic device according to an embodiment of this application.

### DESCRIPTION OF EMBODIMENTS

Terms used in embodiments of this application are merely for the purpose of describing specific embodiments, but are not intended to limit this application.

With continuous expansion of functions of terminal devices, users impose higher requirements on a multi-task processing ability of the devices. In a multi-task processing scenario, a user needs to frequently switch between different tasks to improve work efficiency and cope with diversified application scenarios. For a device having a large screen, an effective solution is to make full use of space of the screen to simultaneously run a plurality of applications and implement interconnection and interworking between these applications, that is, to implement associated operations on the plurality of applications. The associated operations mean that linkage control can be performed on the plurality of applications by using a single user operation, thereby significantly improving work efficiency of the user and better satisfying a complex usage requirement of the user.

As an important part of interaction between the user and the device, a search function plays a vital role in the associated operations on the plurality of applications. The search function in the associated operations is also referred to as an associative search function. When the plurality of applications are simultaneously started on the large screen, the user may perform information search and data processing across applications by using the associative search function. For example, when the user searches for a keyword in a web browser, a note application and an email client on a same screen may automatically present content related to the keyword. Such associative search improves search efficiency and also enables the user to seamlessly switch between different applications, thereby greatly improving user experience. In addition, the associative search function helps the user maintain work continuity when processing a large amount of data, thereby avoiding a complex process of repeatedly entering a same search word among the plurality of applications. An efficient collaboration mechanism in the associative search function enables the user to focus on a task instead of being interfered by a trivial operation, thereby greatly improving work efficiency and user experience.

However, effective use of the foregoing associative search function usually depends on user-initiated triggering. For example, the user may need to select a plurality of applications on a desktop interface to simultaneously start the applications to start the foregoing associative search function. However, for a user who is unfamiliar with this feature, the user may not know that the operation of selecting the plurality of applications to simultaneously start the applications can trigger the associative search function. In addition, when the user needs to trigger the foregoing associative search function, the user further needs to first return to the desktop interface, and then perform the foregoing operation to start the associative search function. From the perspective of the user, the foregoing operation is not convenient enough to satisfy a user requirement. As a result, even if an operating system has already integrated the foregoing associative search function, usage of the function is not ideal due to the user's poor understanding of the associative search function and inconvenience of the triggering manner. To improve the user's understanding and usage of the associative search function, a more intuitive design of prompts or user education is needed to guide the user to discover and use the function. In addition, a more convenient method for triggering associative search needs to be provided to improve user experience.

In view of this, embodiments of this application provide a method for triggering associative search. In the triggering method, an electronic device can start the foregoing associative search function by using diversified methods based on a specific scenario of a user, to provide the user with more intuitive prompts in the specific scenario, so that the associative search function is used more conveniently and efficiently. The foregoing scenario includes but is not limited to the following scenarios: a global search scenario, a single-application search scenario, a multi-application search scenario, an associative search scenario, and a multi-modal input scenario. The following describes the method for triggering associative search in the plurality of scenarios one by one.

### Global search scenario

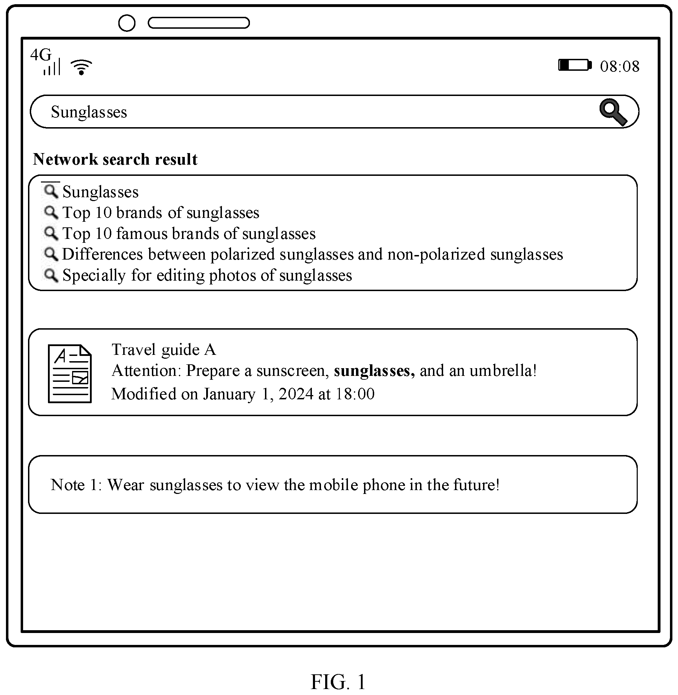

FIG. 1 is a diagram of a result of a kind of existing global search according to an embodiment of this application.

A global search interface is an interface provided by an operating system. This interface allows a user to quickly search for and access, by using a single search box, data that is stored in different applications on a device, thereby implementing a function of search across applications. The search box on the global search interface is also referred to as a global search input box. Data that is in different applications on the device and displayed based on a search word for global search is presented on the global search result interface.

As shown in FIG. 1, currently, after "Sunglasses" is entered in the global search input box, an electronic device may display, on the global search result interface, a search result corresponding to the search word "Sunglasses", for example, a network search result, a document (namely, a travel guide A in FIG. 1) that includes the word "Sunglasses" on the local device, and a result (namely, a note 1) of search in an application A that is obtained by using "Sunglasses" as the search word. For example, the user may directly access the application A by tapping "Note 1" in FIG. 1, to view the result of search for the keyword "Sunglasses", that is, directly jump to an interface on which the note 1 in the application A is located. However, as shown in FIG. 1, the electronic device may generate a plurality of search results based on a same search word on the global search result interface. The plurality of search results may be provided by different applications, but the user can select to view only one of the search results, and the foregoing multi-task associative search effect cannot be achieved.

However, a main purpose of performing the foregoing global search by the user is to learn which content on the electronic device is related to the entered search word and quickly access information related to the search word. After the global search is performed, only a search result of a single application can be viewed, and the user demand for comprehensiveness and convenience in the global search cannot be satisfied. Therefore, if the associative search function can be simultaneously triggered for a plurality of applications, that is, a plurality of applications can be started in the global search and the plurality of applications are able to provide respective search results based on a same search word, this can greatly help the user quickly access and view information. Such associative search function enables the user to seamlessly switch between different applications and between different data sources, to obtain and compare information more effectively, thereby improving a scope and a depth of search. Therefore, a method for triggering associative search needs to be added to the global search interface, to improve user experience and enable information search to be more efficient and comprehensive.

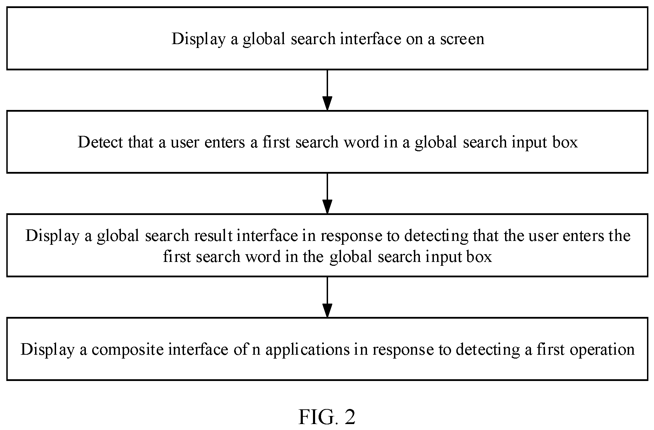

FIG. 2 is a schematic flowchart of a method for triggering associative search in a global search scenario according to an embodiment of this application.

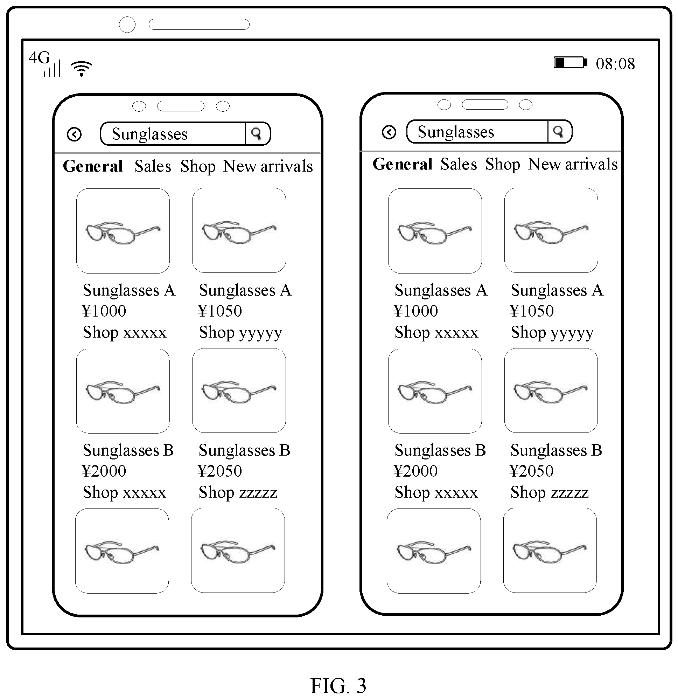

As shown in FIG. 2, an electronic device may display a global search interface on a screen. The global search interface includes the foregoing global search input box. Next, the electronic device may detect that a user enters a search word in the foregoing global search input box. The search word is also referred to as a first search word. In response to detecting that the user enters the search word in the global search input box, the electronic device may display a global search result interface. The global search result interface includes search result indication information of m applications, where m is a positive integer greater than or equal to 2. Then, in response to detecting a user operation, the electronic device may display a composite interface of n applications shown in FIG. 3. The composite interface includes application interfaces of at least two applications, and the interfaces of the at least two applications respectively include search results related to the search word, where n is less than or equal to m. The user operation on the global search result interface is also referred to as a first operation.

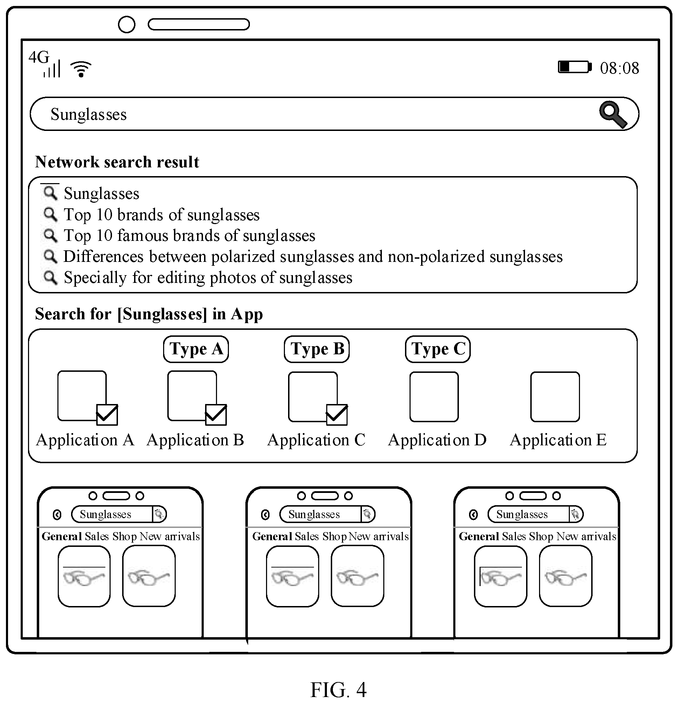

FIG. 4 is a diagram of an example of an interface in a specific implementation in a global search scenario. Compared with the global search interface shown in FIG. 1, the global search interface shown in FIG. 4 is adjusted to some extent to bring in an associative search function.

As shown in FIG. 4, following the display of the global search interface on a screen, after detecting that a user enters a search word (for example, "Sunglasses") in a global search input box, an electronic device may display a global search result interface based on the search word entered by the user. The global search result interface may include search result indication information of m applications. Optionally, the search result indication information of the application may be an icon of the application. For example, it can be learned from FIG. 4 that the electronic device may display icons of the plurality of (namely, m) applications under a module item "Search for [Sunglasses] in App". It may be understood that the plurality of applications each may provide a search result related to "Sunglasses". Optionally, the plurality of applications may be displayed in a classified manner on the global search result interface based on types of the applications, for example, a type A, a type B, and a type C in FIG. 4. Then the electronic device may accept a selection operation (for example, a selection operation shown in FIG. 4) performed by the user on some or all of the plurality of applications, and display an associative search interface shown in FIG. 3. The selection operation performed by the user is the first operation. It may be understood that the electronic device may have set, by default, applications for associative search before the user performs selection. Optionally, before the selection operation performed by the user is detected, the n applications may be set by default as top n applications in the m applications in terms of a frequency of use by the user. Optionally, before the selection operation performed by the user is detected, the n applications may be set by default as top n applications in the m applications in terms of a degree of association between a respective search result and the search word. This is not limited to the foregoing manner. A specific manner concerning how the electronic device determines, before the first operation performed by the user is detected, the n default applications for associative search is not specifically limited in embodiments of this application.

After determining the applications for associative search, the electronic device may perform an operation of jumping from the interface shown in FIG. 4 to the interface shown in FIG. 3. Optionally, after detecting that the user does not perform a new selection operation within a first time on the plurality of displayed applications, the electronic device may jump from the global search result interface to the composite interface of the applications shown in FIG. 3. Optionally, the electronic device may further display a confirmation control (not shown in FIG. 4) along with the plurality of applications. After the electronic device detects a user operation performed on the confirmation control, the electronic device is triggered to jump from the global search result interface to the composite interface of the applications shown in FIG. 3. This is not limited to the foregoing manner. After the applications are selected for associative search, the electronic device may jump from the interface shown in FIG. 4 to the interface shown in FIG. 3 in another manner. This is not specifically limited in embodiments of this application. In this specification, a user operation to be performed on various controls is a user operation that can trigger a function of the control, and includes but is not limited to a tapping operation. This is not specifically limited in embodiments of this application.

In some implementations, after the selection operation performed on the application is detected (that is, after the first operation is detected) and before the composite interface of the n applications is displayed, the electronic device may also display thumbnails of search results of the n applications below the search result indication information of the m applications on the global search result interface. In the n thumbnails, a same search word (namely, the first search word) is filled in search boxes of all the n applications, and respective search results of the n applications are further displayed in the n thumbnails. It may be understood that the n applications are determined from the m applications based on the foregoing selection operation. In other words, the electronic device may display, on the global search result interface, the thumbnails of the search results that are of the applications selected by the user and that are obtained based on the search word, to help the user quickly determine whether to choose to start the applications. Optionally, the electronic device may determine an arrangement order of the thumbnails based on a sequence of the application selection operations. Optionally, the arrangement order of the thumbnails on the global search result interface may alternatively be determined based on one or more of the following: a frequency at which the user uses the application, and a degree of association between a respective search result of the application and the search word. The degree of association between the search result and the search word may be measured by using an indicator such as a recall rate. This is not limited to the foregoing sorting manner. A manner of sorting the thumbnails of the search results that are of the applications and that are obtained based on the search word in the global search is not specifically limited in embodiments of this application.

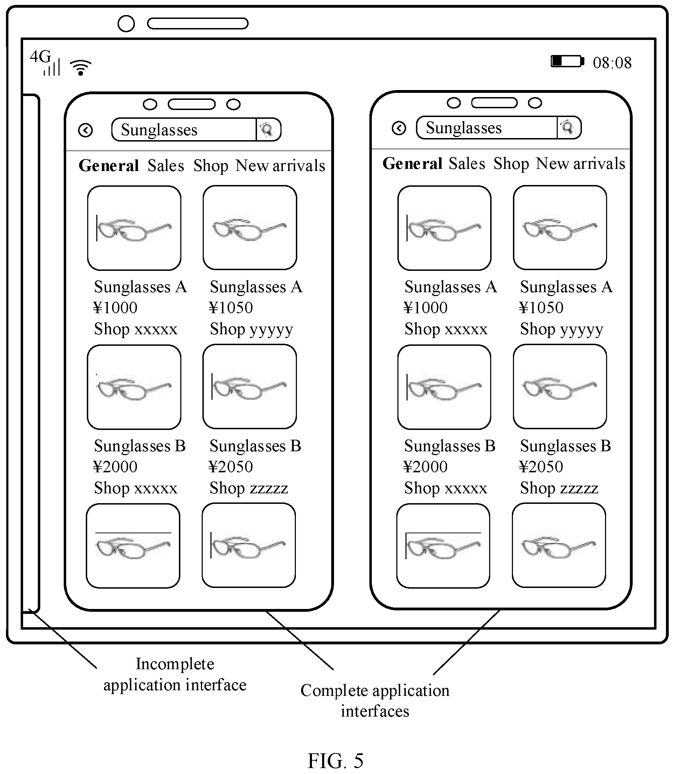

Instead of being limited to tiled display shown in FIG. 3, when a quantity of applications that can be displayed on the screen of the device is less than a quantity of applications selected by the user for associative search, the electronic device may further display an incomplete search interface of a remaining application on a side of the screen. Specifically, as shown in FIG. 5, in this case, at least two complete application interfaces and at least one incomplete application interface are displayed on the composite interface of the n applications. It may be understood that a quantity of applications that can be fully displayed by the electronic device actually depends on a size of the screen of the device. For example, for a screen size shown in FIG. 5, when the user selects three applications for associative search, n is equal to 3. However, due to a limitation in the screen size, the electronic device may display two complete application interfaces on the screen, and display one incomplete application interface on a side of the screen.

Whether application interfaces of the n applications displayed on the composite interface are complete may be determined based on one or more of the following: the frequency at which the user uses the application, and the degree of association between the respective search result of the application and the search word. This is not limited to the foregoing method. How the electronic device specifically determines complete application interfaces of the n applications to be displayed and incomplete application interfaces of the n applications to be displayed is not specifically limited in embodiments of this application.

In some embodiments, after detecting that the user enters the search word in the global search input box, the electronic device may directly perform the operation of displaying the composite interface of the n applications. In other words, in a global search process, after the user performs the search, the electronic device may directly jump from the global search interface, to display the composite interface of the applications shown in FIG. 3. The composite interface shown in FIG. 3 is also referred to as a multi-application search interface.

It may be understood that, in the foregoing solution of directly performing the operation of displaying the composite interface of the n applications, the electronic device may select the n applications from the m applications, and display the composite interface of the n applications.

Optionally, the electronic device may determine the n applications based on the frequency of use by the user, that is, the electronic device may select, from the m applications that are able to provide search results corresponding to the search word, top n applications in terms of the frequency of use by the user for display. Optionally, the electronic device may alternatively determine, based on the degree of association between the search result and the search word, which of the m applications are the n applications. Optionally, the electronic device may alternatively select the n applications at random from the m applications that are able to provide search results corresponding to the search word, and display the composite interface of the n applications.

This is not limited to the foregoing solutions. In embodiments of this application, specifically how the electronic device directly determines, when there is no user operation, which applications are the n applications to be displayed is not specifically limited.

### Single-application search scenario

It may be understood that, when a user performs search using an application, the user may need to obtain content and/or a service related to a same search word in another application. For example, when the user purchases a commodity A by using a shopping application A, the user may have a requirement for starting a shopping application B to search for the commodity A for price comparison. Therefore, in a scenario of search in a single application, if an electronic device can actively prompt the user for triggering associative search with a same search word in a plurality of applications, the user can obtain more search results by performing fewer user operations, thereby improving user experience in associative search and resolving a practical requirement of the user.

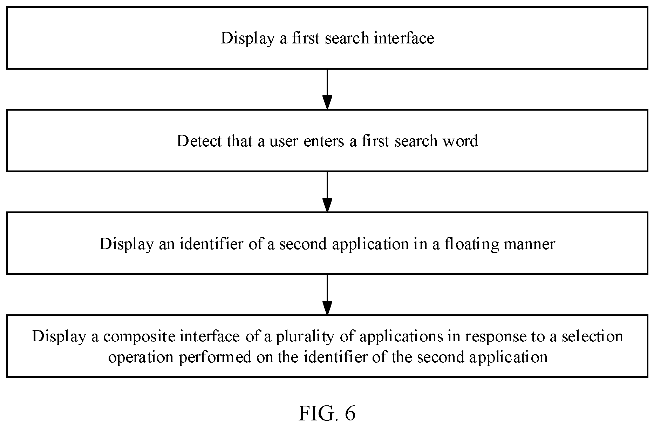

FIG. 6 is a schematic flowchart of a method for triggering associative search in a single-application search scenario according to an embodiment of this application.

Specifically, as shown in FIG. 6, an electronic device may display a first search interface. The first search interface is a search interface of an application being currently used by a user, and the first search interface includes an input box. The application being currently used by the user is also referred to as a first application. Then the electronic device may detect that the user enters a search word. The search word is also referred to as a first search word. After detecting the first search word, the electronic device may display an identifier of a second application in a floating manner. In response to a selection operation performed on the identifier of the second application, the electronic device may display a composite interface of a plurality of applications. The composite interface may include a first search result interface and a second search result interface. The first search result interface displays a search result that is based on the first search word and provided by the first application, and the second search result interface displays a search result that is based on the first search word and that is of the second application.

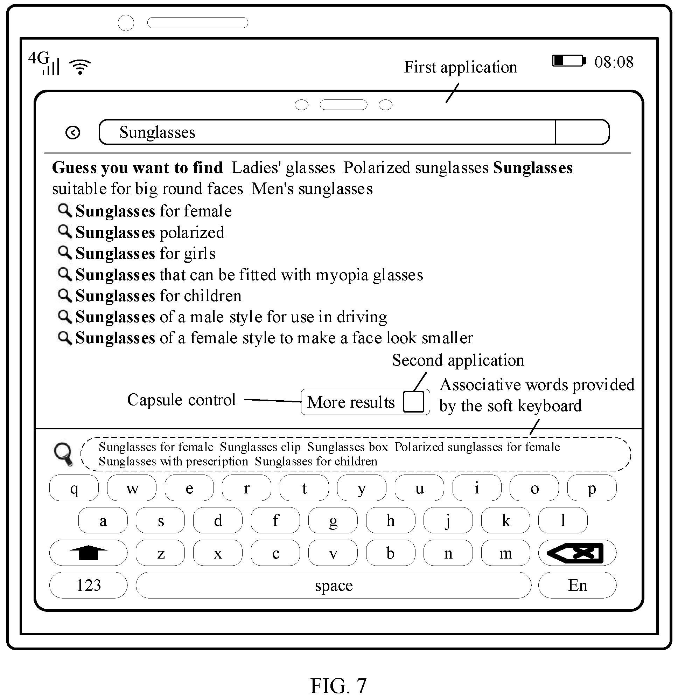

FIG. 7 is a diagram of an example of an interface for triggering associative search in a plurality of applications in a single-application search scenario.

For example, the search interface shown in FIG. 7 is the first search interface of the first application. When an electronic device detects on the first search interface that a user enters a search word, the electronic device may start a soft keyboard on a screen, and the user may enter the search word by using the soft keyboard.

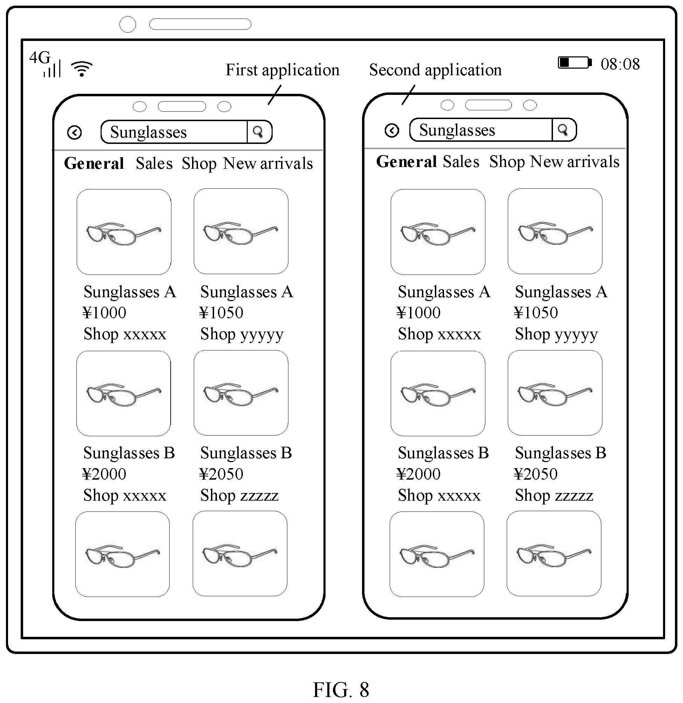

FIG. 7 is used as an example. The search word entered by the user is "Sunglasses". After the user enters the search word and before a search operation is performed, that is, when the electronic device does not detect an operation that acts on a search control, the electronic device may display, on the first search interface, some associative search words generated based on the search for "Sunglasses", for example, an associative search word such as "Sunglasses for female" shown in FIG. 7. In this case, optionally, as shown in FIG. 7, based on the search word entered by the user, the soft keyboard of the electronic device may provide some associative words accordingly. Next, based on the search word entered by the user, the electronic device may display the identifier of the second application in the floating manner above the associative word provided by the soft keyboard. Optionally, as shown in FIG. 7, the electronic device may display the identifier of the second application in a capsule control. The electronic device further displays text prompt information "More results", in addition to the identifier of the second application, in the capsule control, to guide the user to perform an operation on the capsule control, to trigger associative search in a plurality of applications. Instead of being limited to the foregoing representation form of the capsule control, the electronic device may prompt, by using a control of another style, the user for triggering associative search in a plurality of applications. This is not specifically limited in embodiments of this application. Optionally, the identifier of the second application may be an icon of the second application. In response to a selection operation performed on the identifier of the second application, the electronic device may display a composite interface of a plurality of applications, including a first search result interface and a second search result interface, that is, jump to an interface shown in FIG. 8. It may be understood that, on the interface shown in FIG. 8, a search result interface on the left is the first search result interface. The first search result interface includes a result of search for "Sunglasses" provided by the first application, and a search result interface on the right is the second search result interface. The second search result interface includes a result of search for "Sunglasses" provided by the second application.

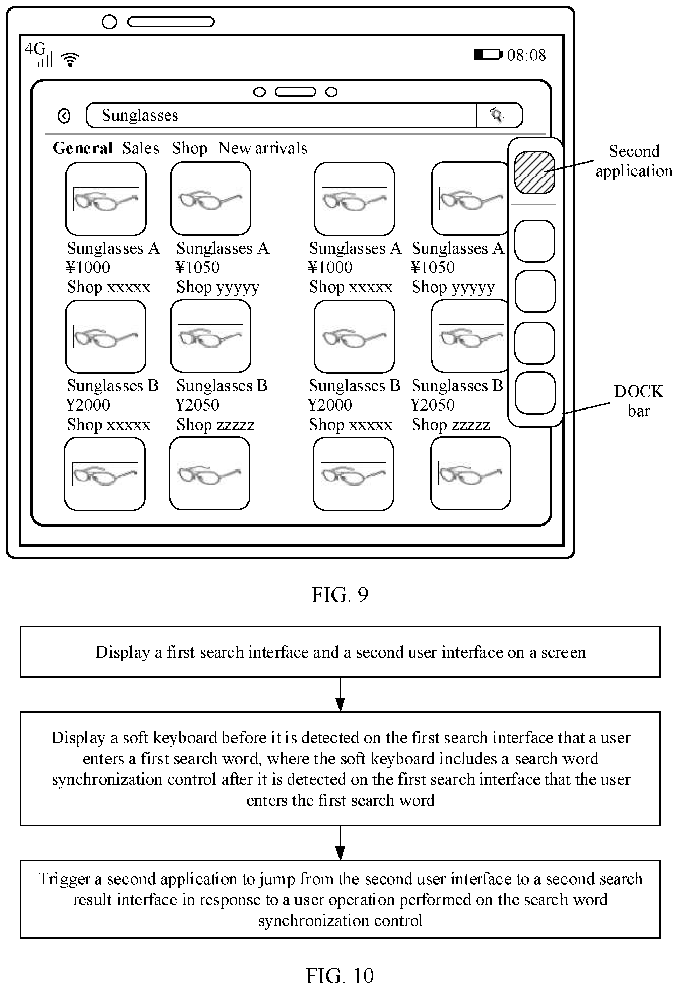

FIG. 9 is a diagram of another interface for triggering associative search in a plurality of applications in a single-application search scenario according to an embodiment of this application.

As shown in FIG. 9, an electronic device may display a search result that is based on the first search word and that is provided by the first application, and display a DOCK bar on a side of a screen. The DOCK bar means a functional interface that is included in a graphical user interface and that is used to start an application and switch a running application. It may be understood that the interface shown in FIG. 9 may be considered as a jumping result of the first search interface shown in FIG. 7 after the search control is tapped. On the interface shown in FIG. 9, that the electronic device displays the identifier of the second application in the floating manner specifically means that: The identifier of the second application is added to and displayed at, based on the search word (for example, "Sunglasses") on the first search interface, a position indicated by a part filled with slashes shown in FIG. 9 on the DOCK bar. Similarly, the identifier of the second application may also be an icon of the second application. It may be understood that the identifier of the second application is added to the DOCK bar because a corresponding search word is present in the search box of the first search interface. If the search word is deleted, the icon of the second application does not appear on the DOCK bar accordingly. Similarly, if a selection operation performed on the identifier of the second application on the DOCK bar is detected, the electronic device may jump from the interface shown in FIG. 9 to the interface shown in FIG. 8.

It may be understood that, in the solution shown in FIG. 7 or FIG. 9, the second application is an application that is able to provide content and/or a service related to the search word on the first search interface. If no other application on the electronic device can obtain a search result (namely, content and/or a service related to the search word) based on the search word on the first search interface, optionally, after detecting on the first search interface that a user enters the search word, the electronic device may not display the capsule control and the DOCK bar on the foregoing search interface accordingly.

In the foregoing description, the second application may be an application whose complete search interface is displayed on the composite interface of the plurality of applications shown in FIG. 8. However, for the screen, application interfaces that can be simultaneously and fully displayed are limited. For example, for the interface shown in FIG. 8, search result interfaces of only two applications may be fully displayed, and one search result interface is provided by the first application originally with interface display. Therefore, there is only one second application. In the foregoing example, a display effect is described by using an example in which there is only one second application in the capsule control and on the DOCK bar. However, instead of being limited to a single application, a plurality of application identifiers may be displayed in the floating manner on the first search interface. This means that in some embodiments, the composite interface includes at least two complete application interfaces and at least one incomplete application interface, and the application interfaces separately display content and/or services that are related to the first search word and respectively provided.

For a specific display manner, refer to FIG. 5. Details are not described herein.

### Multi-application search scenario

It may be understood that when a user has started a plurality of applications in a multipane manner or the like, an electronic device may help, by using an associative search function, the user quickly switch and compare information between different applications, thereby improving work efficiency.

FIG. 10 is a schematic flowchart of a method for triggering associative search in a multi-application search scenario according to an embodiment of this application.

Specifically, as shown in FIG. 10, an electronic device may display a first search interface and a second user interface on a screen. The first search interface is a search interface of a first application, and the second user interface is a non-search interface of a second application. Before detecting on the first search interface that a user enters a first search word, the electronic device may display a soft keyboard for the user to perform input. After it is detected on the first search interface that the user enters the first search word, the soft keyboard may include a search word synchronization control. In response to a user operation performed on the search word synchronization control, the electronic device may trigger the second application to jump from the second user interface to a second search result interface. The second search result interface is a search result interface of the second application, and a search result on the second search result interface is content and/or a service that are/is related to the first search word and provided by the second application.

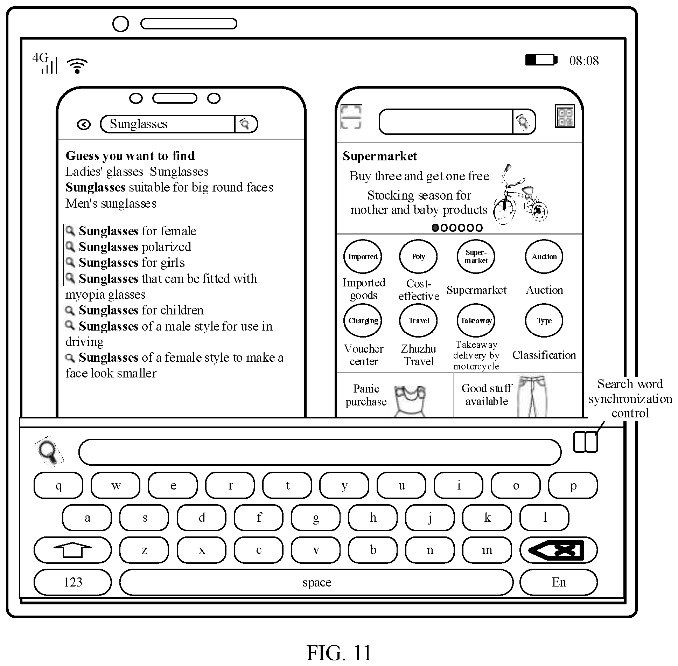

FIG. 11 is a diagram of an interface for triggering associative search in a plurality of applications in a multi-application search scenario according to an embodiment of this application.

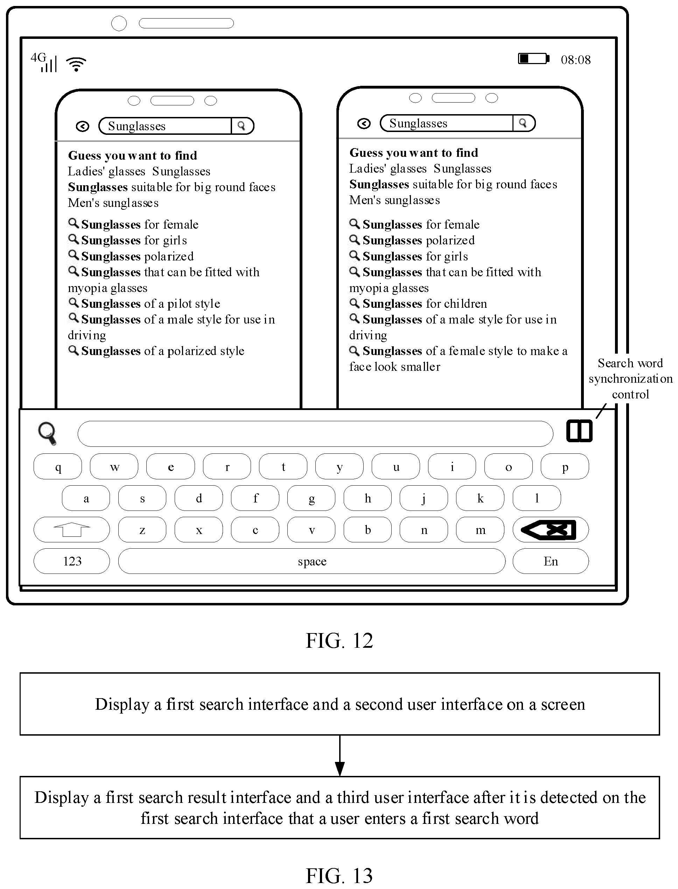

As shown in FIG. 11, two application interfaces are displayed on an electronic device. A left interface is the first search interface, and a right interface is the second user interface. Before the electronic device detects on the first search interface that a user enters a search word (for example, "Sunglasses"), the electronic device may start and display a soft keyboard. The search word may be entered by using the soft keyboard. After it is detected on the first search interface that the user enters the search word, the soft keyboard may include a search word synchronization control. After detecting a user operation (for example, a tapping operation on the search word synchronization control) performed on the search word synchronization control, as shown in FIG. 12, the electronic device may display the search word synchronization control in bold. In addition, the electronic device may trigger an interface displayed for the second application to jump from a non-search interface (namely, the second user interface) to a search interface (namely, a second search interface) or a search result interface (namely, the second search result interface). The search word entered by the user is also filled in a search box on the second search result interface. It may be understood that, in response to the user operation performed on the search word synchronization control, the electronic device triggers the second application to jump from the second user interface to the second search interface, as shown in FIG. 12. This is equivalent to that the electronic device directly copies the search word entered by the user on the first search interface to the second search interface. However, if the electronic device triggers, in response to the user operation performed on the search word synchronization control, the second application to jump from the second user interface to the second search result interface, this is equivalent to that the electronic device automatically performs a search operation in the foregoing solution, where the user does not need to tap again for search.

The case shown in FIG. 11 is used as an example. Applications on the left and right sides are applications of a same type, that is, the second application is able to provide content and/or a service related to "Sunglasses". In this case, if the user taps the search word synchronization control, this is equivalent to copying the search word "Sunglasses" from the first application to the second application for search. In a multi-application search scenario, instead of being limited to applications of a same type shown in FIG. 11, a plurality of started applications may belong to different application types, provided that the second application is able to provide content and/or a service related to the search word.

Optionally, if the second application is unable to provide content and/or a service related to the search word, the electronic device may not display the search word synchronization control. In other words, the electronic device displays the search word synchronization control on the soft keyboard only when an application (for example, the second application) on the right side of FIG. 11 is able to provide content and/or a service related to the search word. This means that in this embodiment, the electronic device may display the first search interface and a fourth user interface on the screen. The fourth user interface is a non-search interface of a third application, and the third application does not provide search content and/or a service related to the first search word. Therefore, before detecting on the first search interface that the user enters the search word, the electronic device may still display the soft keyboard on the screen, and the user may still enter the foregoing search word (namely, the first search word) by using the soft keyboard. However, after it is detected on the first search interface that the user enters the first search word, the soft keyboard displayed on the electronic device may not include the search word synchronization control. Indication of whether the search word synchronization control is available is not limited to displaying the search word synchronization control or not. The electronic device may also indicate, by using different patterns, different controls, or different display colors, whether the search word synchronization control is currently available. This is not specifically limited in embodiments of this application.

Optionally, if the second application is unable to provide content and/or a service related to the search word, the electronic device may still display the search word synchronization control. However, when the user taps the search word synchronization control, the interface of the second application does not experience the foregoing jump and change from a non-search interface to a search interface.

It may be understood that, in some embodiments, the second application in the plurality of applications started by the user may include a plurality of applications, that is, before the associative search function is triggered, the electronic device already displays at least two complete application interfaces and at least one incomplete application interface on the screen. However, in the plurality of applications, there is an application that is able to provide content and/or a service related to the search word, and there is also an application that is unable to provide content and/or a service related to the search word. In this case, the soft keyboard of the electronic device may still display the search word synchronization control. However, after detecting a user operation performed on the search word synchronization control, the electronic device triggers only an interface of the application that is able to provide content and/or a service related to the search word to jump.

### Associative search scenario

It may be understood that the associative search scenario is similar to the foregoing multi-application search scenario to some extent. For example, in both scenarios, an electronic device may display a plurality of application interfaces on a screen. However, in the foregoing multi-application search scenario, it is more emphasized that a user may share a search word among a plurality of applications by using a search word synchronization control on the soft keyboard. In the associative search scenario, it is more emphasized that the electronic device may automatically trigger, by using a search word entered in one application, an associative search operation in another application. It may be understood that, compared with the multi-application search scenario, in the associative search scenario, association between applications displayed by the electronic device on the screen may be weaker. This is because, in the associative search scenario, it suffices if content and/or services provided by different applications can be associated with each other through a search word. In the multi-application search scenario, content and/or services provided by different applications need to be based on a same search word. In other words, in the associative search scenario, for a same search word, content and/or services that the electronic device are able to provide in another application may be more than those in the foregoing multi-application search scenario.

FIG. 13 is a schematic flowchart of a method for triggering associative search in an associative search scenario according to an embodiment of this application.

Specifically, as shown in FIG. 13, an electronic device may display a first search interface and a second user interface on a screen. The first search interface is a search interface of a first application, and the second user interface is a user interface of a second application. After detecting on the first search interface that a user enters a search word (namely, a first search word), the electronic device may display the first search interface and a third user interface. The first search interface displays a search result that is based on the first search word and provided by the first application, the third user interface is another user interface of the second application, and the third user interface displays content and/or a service that are/is related to the search word (namely, the first search word) and provided by the second application.

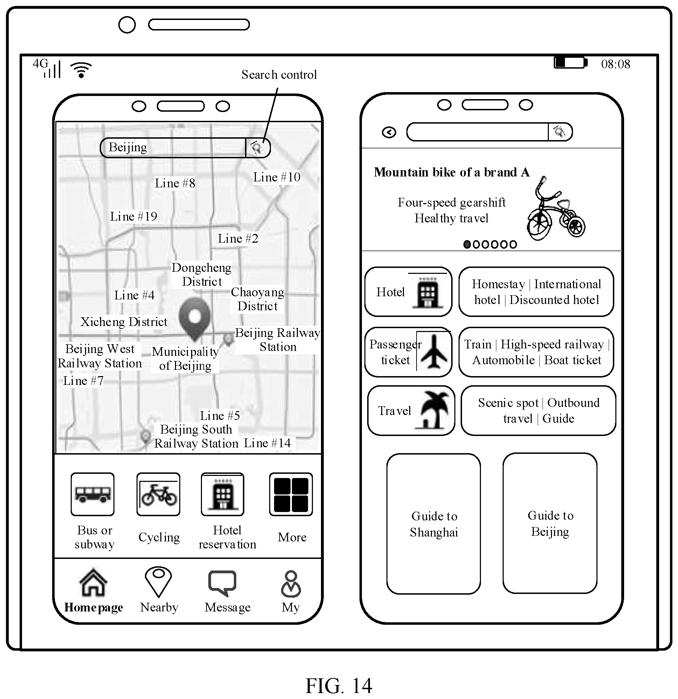

FIG. 14 is a diagram of an interface for triggering associative search in a plurality of applications in an associative search scenario according to an embodiment of this application.

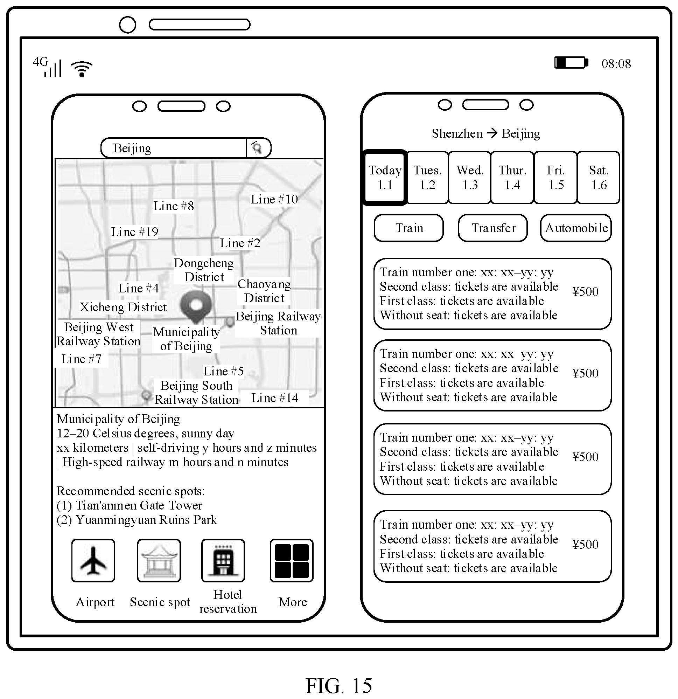

An electronic device may display a plurality of applications on a screen. For example, as shown in FIG. 14, the electronic device displays a map application which serves as the first application on a left side, and displays a travel application which serves as the second application on a right side. In this case, a user enters a search word "Beijing" (also referred to as a place A) on the first search interface for search. Then, as shown on a first search result interface on the left side of FIG. 15, the first search result interface displayed by the electronic device may include a result of search for Beijing (namely, the place A) in the map application, including information such as a name of Beijing, a temperature of a current day, and weather of the current day. In addition, the electronic device may search for a related service and/or content in the second application based on the search word "Beijing". For example, as shown on an application interface (namely, the third user interface) on the right side of FIG. 15, the electronic device may display an interface for buying a high-speed railway ticket for going from a local place (for example, Shenzhen, also referred to as a place B) to Beijing on the current day. Data needed for the second application to provide the content and/or the service shown in FIG. 11, such as a location (namely, the place B) of the device and a current date, may be obtained by the electronic device from an operating system.

It may be understood that a scope of the service and/or the content that are/is related to the search word and provided by the electronic device on the third user interface is not limited to a search result that is obtained through search using the first search word in the second application. In other words, in the associative search scenario, it suffices if the service and/or the content that the second application is able to provide on the third user interface are/is related to the first search word. For example, in the foregoing example, for the same search word "Beijing", the electronic device may provide information about "Imperial Palace" on the third user interface. Optionally, the electronic device may determine whether the service and/or the content provided on the third user interface and the first search word are related to each other by determining whether the two belong to a same search intention. In embodiments of this application, how the electronic device specifically determines that the service and/or the content provided on the third user interface in the associative search scenario are/is related to the first search word is not specifically limited.

It may be understood that, in the associative search scenario, the first application and the second application may be a same application, that is, for the interface shown in FIG. 14, the first search result interface and the third user interface are actually different content and/or different services that are in the first application and related to the first search word.

In other words, the associative search method can be triggered only when the application is able to provide content or a service related to the first search word. Therefore, in the foregoing method, actually, after detecting on the first search interface that the user enters the search word, the electronic device may further determine that the second application is able to provide content and/or a service related to the first search word.

This also means that, before it is detected on the first search interface that the user enters the search word, the first search interface of the first application is on the left side, and a user interface of a third application is on the right side. The third application is an application that is unable to provide content or a service related to the first search word. After detecting on the first search interface that the user enters the search word, optionally, the electronic device may maintain an original application interface (also referred to as a fifth user interface) in the third application. For example, there are two application interfaces on the screen, one is the map application, and the other is a document editor. In this case, if the user still searches for Beijing in the map application, because the document editor is unable to provide content and/or a service related to the first search word "Beijing", the document editor may not respond, and a currently displayed application interface is maintained.

After detecting on the first search interface that the user enters the search word, optionally, the electronic device may display the first search result interface and the third user interface. The first search result interface displays a search result that is based on the search word and provided by the first application, the third user interface is a user interface of the second application, and the third user interface displays content and/or a service that are/is related to the first search word and provided by the second application. It may be understood that, in the foregoing solution, when the third application cannot satisfy a condition for triggering associative search, a fourth user interface of the third application is replaced with the third user interface provided by the second application that is able to trigger associative search, to implement an associative search effect. In addition, the user does not need to manually close the third application and then start the second application to trigger the associative search, thereby greatly reducing complexity of a user operation and improving user experience in using the associative search function. In the foregoing example, when the electronic device finds that the document editor is unable to provide content and/or a service related to the first search word "Beijing", the electronic device may ultimately display the high-speed railway ticket buying interface of the travel application beside the first search interface.

It may be understood that the second application used to replace the third application may be determined by the electronic device based on one or more of the following from an application that is able to provide content and/or a service related to the first search word: a frequency at which the user uses the application, and a degree of association between the content and/or the service that are/is in the application and related to the first search word and the first search word. In embodiments of this application, how the electronic device specifically selects the second application for replacement is not specifically limited.

### Multi-modal input scenario

Multi-modal input means an input event from different input devices to which a system may respond, including a button touching operation, tapping, a screen touching operation, a voice instruction, and the like from a user.

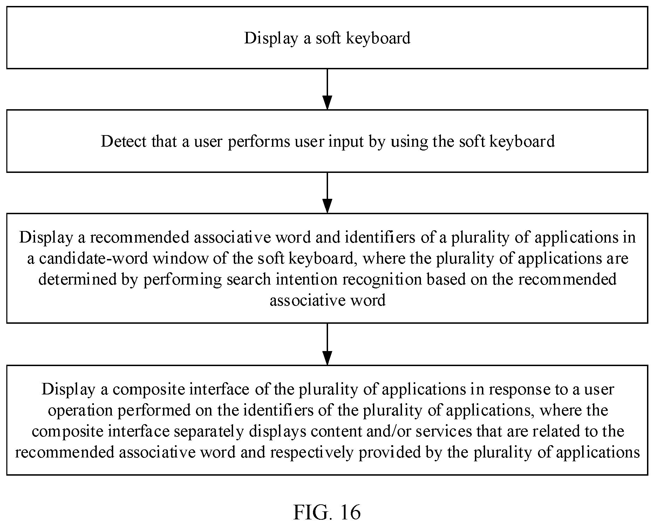

FIG. 16 is a schematic flowchart of a method for triggering associative search in a multi-modal input scenario according to an embodiment of this application.

Specifically, as shown in FIG. 16, in the multi-modal input scenario, an electronic device may display a soft keyboard, and detect that a user performs user input by using the soft keyboard. Subsequently, the electronic device may display a recommended associative word and identifiers of a plurality of applications in a candidate-word window of the soft keyboard. The plurality of applications are determined by performing search intention recognition based on the recommended associative word. In response to a user operation performed on the identifiers of the plurality of applications, the electronic device may display a composite interface of the plurality of applications. The composite interface separately displays content and/or services that are related to the recommended associative word and respectively provided by the plurality of applications. Because the scenario is a multi-modal input scenario, a manner and a way of starting the soft keyboard by the electronic device are not specifically limited in embodiments of this application.

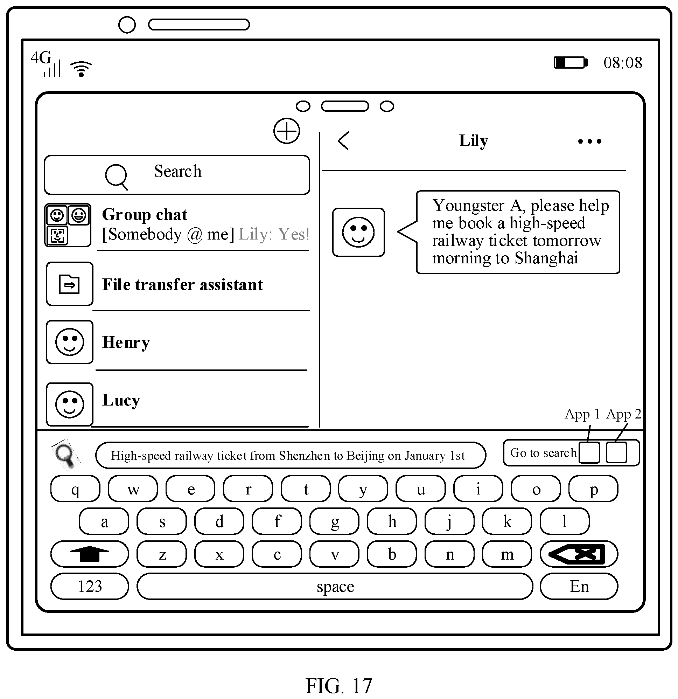

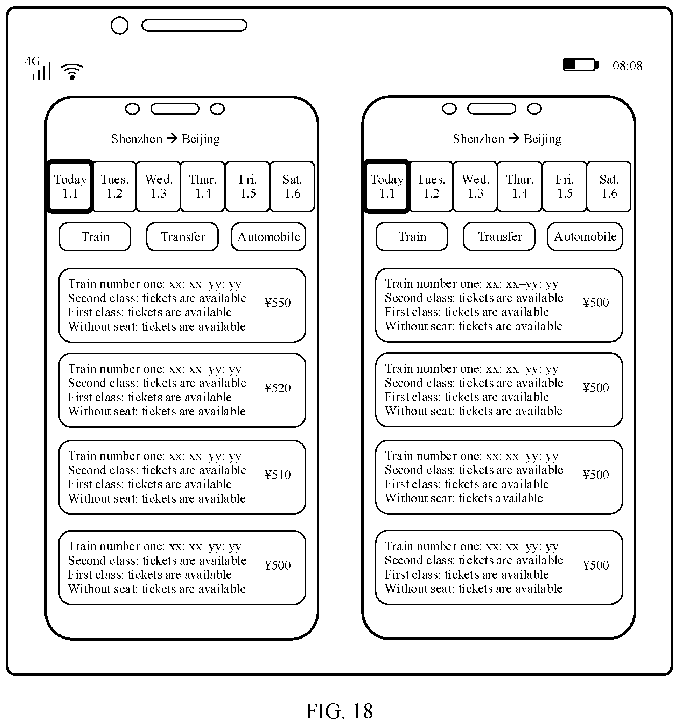

FIG. 17 is used below for description. As shown in FIG. 17, an electronic device may display a chat interface, and detect, on the chat interface, an operation of tapping an input box on the chat interface by a user, to start a soft keyboard. It may be understood that, according to a chat record shown in FIG. 17, the user (for example, a youngster A) has a requirement for helping Lily book a high-speed railway ticket for going to Shanghai tomorrow. In this case, the user may enter the following text information by using the soft keyboard: "a high-speed railway ticket for going from Shenzhen to Beijing on January 1". The text information is also referred to as a recommended associative word, and the recommended associative word may be obtained based on an associative word of an input method, or may be obtained based on a candidate word entered by the user. The candidate word means that character codes entered by the user fully correspond to the foregoing text information. The associative word means that character codes entered by the user do not fully correspond to the foregoing text information, and some content is supplemented by the input method. When the electronic device detects that a candidate-word window of the soft keyboard includes the recommended associative word, the electronic device may display identifiers of a plurality of applications in the candidate-word window of the input method based on the recommended associative word. The plurality of applications each may provide content and/or a service related to the recommended associative word "a high-speed railway ticket for going from Shenzhen to Beijing on January 1" based on the recommended associative word. Similarly, the identifier of the application may be an icon of the application. In response to a selection operation performed on the identifiers of the plurality of applications, the electronic device may display a composite interface of the plurality of applications shown in FIG. 18. The composite interface separately displays content and/or services that are related to the recommended associative word and respectively provided by the plurality of applications.

It may be understood that, if the method for triggering associative search in the multi-modal input scenario shown in FIG. 16 is not employed, to implement a corresponding effect, the user needs to first exit the chat interface and then start a plurality of applications through which a high-speed railway ticket can be bought to perform search for a plurality of times. It can be learned that interaction between the user and the device is very complicated. Therefore, the method for triggering associative search in the multi-modal input scenario shown in FIG. 16 is actually providing a control (for example, a capsule control) on the soft keyboard (namely, the input method) provided by a system. The control may be understood as a shortcut key of the associative search function in the plurality of applications. An operation on the control can quickly trigger associative search among the plurality of applications that are able to provide corresponding content and/or services, thereby greatly improving interaction efficiency and convenience.

Similar to the global search scenario, the electronic device may further display an incomplete user interface of another application beside a plurality of complete user interfaces displayed. In other words, in some embodiments, the composite interface includes at least two complete application interfaces and at least one incomplete application interface, and the application interfaces separately display content and/or services that are related to the recommended associative word and respectively provided.

In scenarios such as the associative search scenario and the multi-modal input scenario, the electronic device may analyze text content entered by the user, to determine a recommended application to be started or a service and/or content to be provided in the associative search. In some embodiments, the foregoing analysis of the text content entered by the user may be considered as analyzing a search intention of the user. Optionally, the electronic device may recognize the search intention through an intention recognition interface. Optionally, the electronic device may perform the analysis by using a natural language processing (natural language processing, NLP) large model. This is not limited to the foregoing manner. In embodiments of this application, how the electronic device specifically determines, by analyzing the entered text content, the recommended application to be started or the service and/or content that are/is to be provided in the associative search is not specifically limited. It may be understood that, in the foregoing scenario, when the electronic device needs to perform search in the second application, a search word in this case may be different from the first search word entered by the user in the first application. Optionally, the search word in the second application may alternatively be generated by using the NLP large model.

In the plurality of foregoing scenarios, the electronic device needs to obtain a search word entered by the user on a search interface. Optionally, the electronic device may implement the foregoing function based on a clipboard mechanism of an operating system. Specifically, when the user performs input in an application, the input method (also referred to as the soft keyboard) may temporarily store the input data in a special area of memory. The special area is also referred to as a clipboard. The operating system of the electronic device provides the foregoing clipboard mechanism, and allows sharing and transmission of input data between applications. In embodiments of this application, the shared and transmitted data includes the search word (namely, the first search word) entered by the user. After the user triggers an associative search operation on a plurality of applications, the electronic device may store the entered search word into the clipboard; and before displaying another application (namely, the second application), the operating system searches for data in the clipboard and inserts the data into search interfaces of these applications.

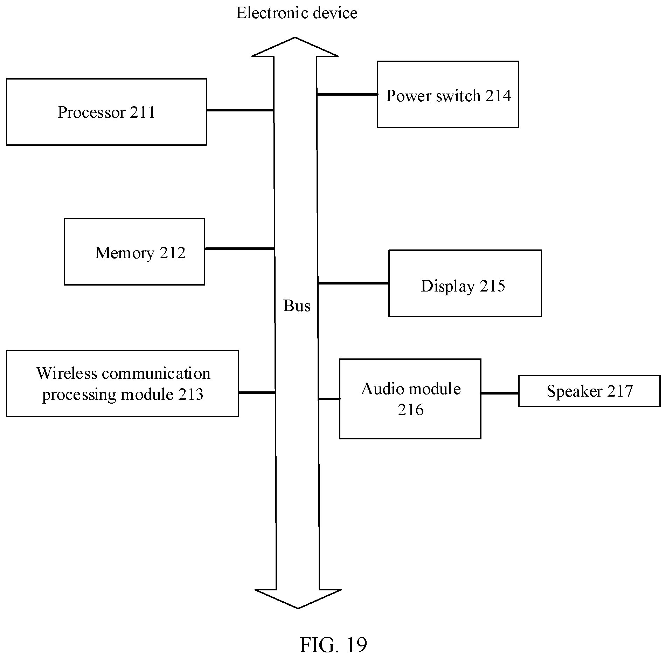

FIG. 19 is a diagram of a hardware structure of an electronic device according to an embodiment of this application.

As shown in FIG. 19, the electronic device may include components such as a processor 211, a memory 212, a wireless communication processing module 213, a power switch 214, a display 215, an audio module 216, and a speaker 217. The components of the electronic device are connected to each other through a bus, and communicate with each other based on the bus.

The processor 211 may include one or more processing units. For example, the processor 211 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. The controller may generate an operation control signal based on an instruction operation code and a time sequence signal, to complete control of instruction fetching and instruction execution.

The memory 212 is coupled to the processor 211, and is configured to store various software programs and/or a plurality of sets of instructions. The memory 212 may be configured to store computer-executable program code. The executable program code includes instructions. The processor 211 runs the instructions stored in the memory 212, to execute various functional applications of the electronic device and process data. A memory may be further disposed in the processor 211, and is configured to store instructions and data.

The memory 212 may include one or more random access memories (random access memories, RAMs), and one or more non-volatile memories (non-volatile memories, NVMs). The random access memory may be directly read and written by the processor 211. The random access memory may be configured to store an executable program (for example, machine instructions) of an operating system or another running program, and may be further configured to store data of a user, data of an application, and the like. The nonvolatile memory may also store an executable program, data of the user, data of an application, and the like. The executable program and the user data stored in the non-volatile memory may be loaded into the random access memory in advance, and is used by the processor 211 to directly perform reading and writing.

Executable program code and data (including but not limited to various voice data) used to implement the method for triggering associative search provided in embodiments of this application may be stored in the nonvolatile memory. In a process of implementing the method for triggering associative search, the electronic device may load the executable program code and user data of the non-volatile memory into the random access memory, to provide the user with a convenient method for triggering associative search, thereby improving efficiency of human-machine interaction.

The wireless communication processing module 213 may provide a wireless communication solution including WLAN such as Wi-Fi, Bluetooth communication, ZigBee communication, NFC communication, infrared communication, and UWB communication.

The power switch 214 may be configured to control a power supply to supply power to the electronic device, thereby supplying power to the processor 211, the memory 212, the wireless communication processing module 213, the display 215, the audio module 216, the speaker 217, and the like.

The display 215 may be configured for display. The display 215 includes a display panel. A touch sensor may be disposed in the display 215. The touch sensor is configured to detect a touch operation performed on or near the touch sensor. The touch sensor may transfer the detected touch operation to the application processor to determine a type of a touch event, so that the electronic device may provide, by using the display 215, visual output related to the touch operation. The electronic device may implement a display function by using the GPU, the display 215, the touch sensor, the application processor, and the like. In this embodiment of this application, the electronic device may display a user interface of one or more applications to the user by using the display function provided by the GPU, the display 215, the touch sensor, the application processor, and the like. The user interface of the application includes a search interface and a non-search interface, and performs switching between the plurality of interfaces based on tapping operations on various controls. In addition, the electronic device may receive, based on the foregoing display function, inputs from the user, for example, receive a search word entered by the user on a soft keyboard; and determine, based on the search word, an application for associative search and content and/or a service to be provided by the application.

The audio module 216 may be configured to convert a digital audio signal into an analog audio signal for output, or may be configured to convert analog audio input into a digital audio signal. The speaker 217 may be configured to convert an audio signal sent by the audio module 216 into a sound signal. The electronic device may implement an audio playing function by using the audio module 216, the speaker 217, and the like. In some embodiments, the audio module 216 may further include a microphone, configured to convert a sound signal into an electrical signal. In this embodiment of this application, especially in a multi-modal input scenario, the electronic device may invoke the microphone to pick up voice of the user, generate a voice packet, and then perform voice input by using the voice packet.

It may be understood that the structure shown in this embodiment of this application does not constitute a specific limitation on the electronic device. In some other embodiments of this application, the electronic device may include more or fewer components than those shown in the figure, or combine some components, or split some components, or have different component arrangements. The components may be implemented by using hardware, software, or a combination of software and hardware.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another place. The storage medium may be any available medium accessible to a general-purpose or dedicated computer. An embodiment of this application further provides a computer program product, including a computer program. When the computer program is run on a processor, steps in the foregoing method embodiments may be implemented.

In the foregoing specific implementations, the objectives, technical solutions, and beneficial effects of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application.

## Claims

1. A method for triggering associative search, applied to an electronic device, wherein the method comprises:
displaying a global search interface, wherein the global search interface comprises a global search input box;
detecting that a user enters a first search word in the global search input box;
displaying a global search result interface in response to detecting that the user enters the first search word in the global search input box, wherein the global search result interface comprises search result indication information of m applications, and m is a positive integer greater than or equal to 2; and
displaying a composite interface of n applications in response to detecting a first operation, wherein the composite interface comprises application interfaces of at least two applications, the interfaces of the at least two applications respectively comprise a search result related to the first search word, and n is less than or equal to m.

2. The method according to claim 1, wherein that the global search result interface comprises the search result indication information of the m applications comprises: displaying icons of the m applications on the global search result interface.

3. The method according to claim 1 or 2, wherein after detecting the first operation and before displaying the composite interface of the n applications, the method further comprises: further displaying thumbnails of search results of the n applications below the search result indication information of the m applications on the global search result interface, wherein in the n thumbnails, the first search word is filled in search boxes of all the n applications, and respective search results of the n applications are further displayed in the n thumbnails.

4. The method according to claim 2 or 3, wherein an arrangement order of the icons of the m applications or the n thumbnails on the global search result interface is determined based on one or more of the following: a frequency at which the user uses the application, and a degree of association between a respective search result of the application and the first search word.

5. The method according to any one of claims 1 to 4, wherein the m applications are displayed in a classified manner on the global search result interface based on types of the applications.

6. The method according to any one of claims 1 to 5, wherein the n applications are set by default as top n applications in the m applications in terms of the frequency of use by the user.

7. The method according to any one of claims 1 to 5, wherein the n applications are set by default as top n applications in the m applications in terms of the degree of association between the respective search result and the first search word.

8. The method according to any one of claims 1 to 7, wherein the first operation comprises selecting, by the user, the n applications from the m applications.

9. The method according to any one of claims 1 to 8, wherein at least two complete application interfaces and at least one incomplete application interface are displayed on the composite interface of the n applications.

10. The method according to claim 9, wherein whether application interfaces of the n applications displayed on the composite interface are complete is determined based on one or more of the following: the frequency at which the user uses the application, and the degree of association between the respective search result of the application and the first search word.

11. A method for triggering associative search, applied to an electronic device, wherein the method comprises:
displaying a first search interface, wherein the first search interface is a search interface of a first application, and the first search interface comprises an input box;
detecting that a user enters a first search word;
displaying an identifier of a second application in a floating manner; and
displaying a composite interface of a plurality of applications in response to a selection operation performed on the identifier of the second application, wherein the composite interface comprises a first search result interface and a second search result interface, the first search result interface displays a search result that is based on the first search word and provided by the first application, and the second search result interface displays a search result that is based on the first search word and that is of the second application.

12. The method according to claim 11, wherein after detecting that the user enters the first search word, the method further comprises:
displaying the search result that is based on the first search word and provided by the first application, and displaying a DOCK bar on a side of a screen; and
displaying the identifier of the second application in the floating manner specifically comprises:
adding the identifier of the second application to and displaying the identifier of the second application on the DOCK bar based on the first search word.

13. The method according to claim 11, wherein before detecting that the user enters the first search word, the method further comprises: displaying a soft keyboard, wherein the first search word is entered by using the soft keyboard; and
displaying the identifier of the second application in the floating manner specifically comprises:
displaying, based on the first search word, the identifier of the second application in the floating manner above an associative word provided by the soft keyboard.

14. The method according to any one of claims 11 to 13, wherein the composite interface comprises at least two complete application interfaces and at least one incomplete application interface, and the application interfaces separately display content and/or services that are related to the first search word and respectively provided.

15. A method for triggering associative search, applied to an electronic device, wherein the method comprises:
displaying a first search interface and a second user interface, wherein the first search interface is a search interface of a first application, and the second user interface is a non-search interface of a second application;
displaying a soft keyboard before it is detected on the first search interface that a user enters a first search word, wherein the soft keyboard comprises a search word synchronization control after it is detected on the first search interface that the user enters the first search word; and
in response to a user operation performed on the search word synchronization control, triggering the second application to jump from the second user interface to a second search interface or a second search result interface, wherein the second search interface is a search interface of the second application, the second search result interface is a search result interface of the second application, and a search result on the second search result interface is content and/or a service that are/is related to the first search word and provided by the second application.

16. The method according to claim 15, wherein the method further comprises:
displaying the first search interface and a fourth user interface, wherein the fourth user interface is a non-search interface of a third application, and the third application does not provide search content and/or a service related to the first search word; and
displaying the soft keyboard before it is detected on the first search interface that the user enters the first search word, wherein the soft keyboard does not comprise the search word synchronization control after it is detected on the first search interface that the user enters the first search word.

17. The method according to claim 15 or 16, wherein the first application and the second application are applications of a same type.

18. A method for triggering associative search, applied to an electronic device, wherein the method comprises:
displaying a soft keyboard;
detecting that a user performs user input by using the soft keyboard;
displaying a recommended associative word and identifiers of a plurality of applications in a candidate-word window of the soft keyboard, wherein the plurality of applications are determined based on the recommended associative word; and
displaying a composite interface of the plurality of applications in response to a user operation performed on the identifiers of the plurality of applications, wherein the composite interface separately displays content and/or services that are related to the recommended associative word and respectively provided by the plurality of applications.

19. The method according to claim 18, wherein before displaying the soft keyboard, the method further comprises:
displaying a chat interface; and
detecting an operation of tapping an input box by the user on the chat interface.

20. The method according to claim 18 or 19, wherein the composite interface comprises at least two complete application interfaces and at least one incomplete application interface, and the application interfaces separately display content and/or services that are related to the recommended associative word and respectively provided.

21. A method for triggering associative search, applied to an electronic device, wherein the method comprises:
displaying a first search interface and a second user interface, wherein the first search interface is a search interface of a first application, and the second user interface is a user interface of a second application; and
displaying a first search result interface and a third user interface after detecting on the first search interface that a user enters a first search word, wherein the first search result interface displays a search result that is based on the first search word and provided by the first application, and the third user interface displays content and/or a service that are/is related to the first search word and provided by the second application.

22. The method according to claim 21, wherein after detecting on the first search interface that the user enters the first search word, the method further comprises: determining that the second application is able to provide content and/or a service related to the first search word.

23. The method according to claim 21 or 22, wherein the method further comprises:
displaying the first search interface and a fifth user interface on a screen, wherein the fifth user interface is a user interface of a third application; and
detecting that the user enters the first search word on the first search interface, and displaying the first search result interface and the fifth user interface, wherein the first search result interface displays a search result that is based on the first search word and provided by the first application, and the third application is unable to provide content and/or a service related to the first search word.

24. The method according to claim 21 or 22, wherein the method further comprises:
displaying the first search interface and a fifth user interface, wherein the fifth user interface is a user interface of a third application; and
detecting that the user enters the first search word on the first search interface, and displaying the first search result interface and the third user interface, wherein the first search result interface displays a search result that is based on the first search word and provided by the first application, the third user interface is a user interface of the second application, the third user interface displays content and/or a service that are/is related to the first search word and provided by the second application, and the third application is unable to provide content and/or a service related to the first search word.

25. The method according to claim 24, wherein the second application used to replace the third application is determined by the electronic device based on one or more of the following from an application that is able to provide content and/or a service related to the first search word: a frequency at which the user uses the application, and a degree of association between the content and/or the service that are/is in the application and related to the first search word and the first search word.

26. The method according to any one of claims 21 to 25, wherein the first application is a map application, the first search word is a place A, the second user interface is a homepage of a travel application, the second application is the travel application, the first search result interface displays a search result about the place A in the map application, the third user interface is a ticket buying interface in the travel application, the third user interface displays ticket buying information of a current day for going from a place B to the place A, the place B is a location of the user, and the place B and a current date are read by the electronic device by using an operating system.

27. The method according to any one of claims 21 to 25, wherein the first application is the same as the second application, and the first search result interface and the third user interface display different content and/or different services that are in the first application and related to the first search word.

28. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the method according to any one of claims 1 to 10, or 11 to 14, or 15 to 17, or 18 to 20, or 21 to 27 is performed.

29. A computer-readable storage medium, wherein the computer-readable storage medium stores a computer program, and when the computer program is run on an electronic device, the method according to any one of claims 1 to 10, or 11 to 14, or 15 to 17, or 18 to 20, or 21 to 27 is performed.

30. A computer program product, comprising a computer program, wherein when the computer program is executed by a processor, the method according to any one of claims 1 to 10, or 11 to 14, or 15 to 17, or 18 to 20, or 21 to 27 is performed.
